**Europäisches Patentamt**

**European Patent Office**

**Office européen des brevets**

(19)

(11) Veröffentlichungsnummer : **0 423 135 B1**

(12) # EUROPÄISCHE PATENTSCHRIFT

(45) Veröffentlichungstag der Patentschrift :
**11.11.92 Patentblatt 92/46**

(21) Anmeldenummer : **89905069.4**

(22) Anmeldetag : **24.04.89**

(86) Internationale Anmeldenummer :
**PCT/DE89/00262**

(87) Internationale Veröffentlichungsnummer :
**WO 89/12201 14.12.89 Gazette 89/29**

(51) Int. Cl.$^5$ : **F22B 3/04,** B01D 1/28

(54) **PROZESSANLAGE.**

(30) Priorität : **30.05.88 DE 3818376**

(43) Veröffentlichungstag der Anmeldung :
**24.04.91 Patentblatt 91/17**

(45) Bekanntmachung des Hinweises auf die
Patenterteilung :
**11.11.92 Patentblatt 92/46**

(84) Benannte Vertragsstaaten :
**DE FR GB IT**

(56) Entgegenhaltungen :
**EP-A- 0 058 877**
**EP-A- 0 088 226**
**EP-A- 0 095 439**

(56) Entgegenhaltungen :
**FR-A- 2 492 068**
**FR-A- 2 553 500**
**US-A- 3 956 072**
**Siemens Power Engineering vol.2, no.9/10,**
**Sept. 1980, Erlangen Seiten 298-302; A. Ba-**
**rany et al.: "Humid-air testing unit forthe effi-**
**cient application of liquid-ring vacuumpumps**
**in humid processes"**

(73) Patentinhaber : **SIEMENS**
**AKTIENGESELLSCHAFT**
**Wittelsbacherplatz 2**
**W-8000 München 2 (DE)**

(72) Erfinder : **MUGELE, Kurt-Willy**
**Atzelsberger Steige 1A**
**W-8520 Erlangen (DE)**

## Beschreibung

Die Erfindung betrifft eine Prozeßanlage, die mindestens einen Verdampfer für eine Prozeßflüssigkeit, einen diesem nachgeschalteten Kondensator und eine Vakuumpumpe aufweist, in welcher Anlage die Prozeßflüssigkeit in dem Verdampfer unter Vakuum verdampft und die Brüden (Schwaden bzw. Abdampf) über eine an den Verdampfer angeschlossene Absaugleitung durch den Kondensator hindurch zu der Vakuumpumpe geführt sind.

Eine derartige Prozeßanlage ist aus "SIEMENS POWER ENGINEERING" Vol.2, No. 9/10, Sept. 1980, Seiten 298 bis 302 bekannt. Im bekannten Fall werden die aus dem Verdampferkessel durch die Vakuumpumpe abgesaugten Brüden in dem Kondensator abgekühlt, so daß die nachgeschaltete Vakuumpumpe in ihrer Baugröße kleiner bemessen werden kann. Der Kondensator benötigt zur Abkühlung der Brüden eine große Kühlwassermenge. Über das Kühlwasser wird somit der größte Teil der vorher dem Verdampfer zugeführten Heizenergie an die Umwelt abgegeben.

Es ist zwar schon bekannt, durch Verwendung von Brüden-Kompressoren die Wärmeausnutzung von Prozeßanlagen zu verbessern. Dies erfordert jedoch eine komplette Neuinstallation dieser Anlagen, wobei speziell dimensionierte Anlagenteile erforderlich sind. Solche speziellen Anlageteile sind durch die Informationsschrift "Mechanische Brüden-Kompressoren" der VDI-Gesellschaft Energietechnik vom Januar 1988 bekannt.

Der Erfindung liegt die Aufgabe zugrunde, eine Prozeßanlage der gattungsgemäßen Art mit möglichst wenig Installationsaufwand unter Weiterbenutzung der vorhandenen Anlagenteile so umzugestalten, daß die Wärmeausnutzung wesentlich verbessert ist.

Die Lösung der gestellten Aufgabe gelingt nach der Erfindung dadurch, daß zwischen dem Verdampfer und dem Kondesator ein die Brüden durch den Kondensator drückender Gasringkompressor in die Absaugleitung geschaltet ist, daß ferner als Kühlflüssigkeit Prozeßflüssigkeit durch den Kondensator geleitet, in diesem erwärmt und danach in den Verdampfer gespeist ist. Ein Gasringkompressor arbeitet ölfrei, so daß keine Verschmutzungsgefahr für den geförderten Brüden besteht. Außerdem läßt sich mit einem Gasringkompressor wirtschaftlich ein höheres Druckverhältnis erzielen, wodurch der Brüden entsprechend stärker erwärmt wird. Am Kondensator steht damit eine größere Wärmedifferenz an, so daß eine größere Wärmemenge auf die den Kondensator durchströmende Prozeßflüssigkeit übertragen wird. Somit benötigt der Verdampfer zum Verdampfen der Prozeßflüssigkeit wesentlich weniger zusätzliche Heizenergie. In den meisten Fällen reicht die durch den Kondensator erfolgte Aufheizung der Prozeßflüssigkeit sogar schon aus, um den Prozeß in Gang zu halten. Dies trägt zur weiteren Verbesserung der Wirtschaftlichkeit der Anlage bei. Da durch den Einsatz eines Gasringkompressors die Wirtschaftlichkeit und Betriebssicherheit wesentlich gesteigert ist, lohnt sich vor allem die Umrüstung von kleineren Prozeßanlagen mit Leistungen auch unter 500 kW.

Zweckmäßigerweise wird die Prozeßflüssigkeit mittels einer Umwälzpumpe durch den Kondensator gepumpt. Ist der in der Anlage eingesetzten Vakuumpumpe ein Wärmetauscher zugeordnet, so kann der Rückgewinn der Wärmemenge noch dadurch erhöht werden, daß die Prozeßflüssigkeit durch die Umwälzpumpe ferner über den der Vakuumpumpe zugeordneten Wärmetauscher geführt wird.

Die Umrüstung einer Prozeßanlage wird dadurch wesentlich erleichtert, daß der Gasringkompressor und die Vakuumpumpe auf einem gemeinsamen Kastenrahmen angeordnet sind, an dem ferner die für den Anschluß des Gasringkompressors und des Kondensators erforderlichen externen Rohranschlüsse vorgesehen sind.

Der in Prozeßanlagen meistens anfallende Dampf kann dadurch genutzt werden, daß der Gasringkompressor von einer Dampfturbine angetrieben wird.

Anhand eines Ausführungsbeispieles wird die Erfindung nachfolgend näher beschrieben. Es zeigen:

FIG 1 eine Prozeßanlage nach dem Stand der Technik,

FIG 2 eine erfindungsgemäß umgestaltete Prozeßanlage.

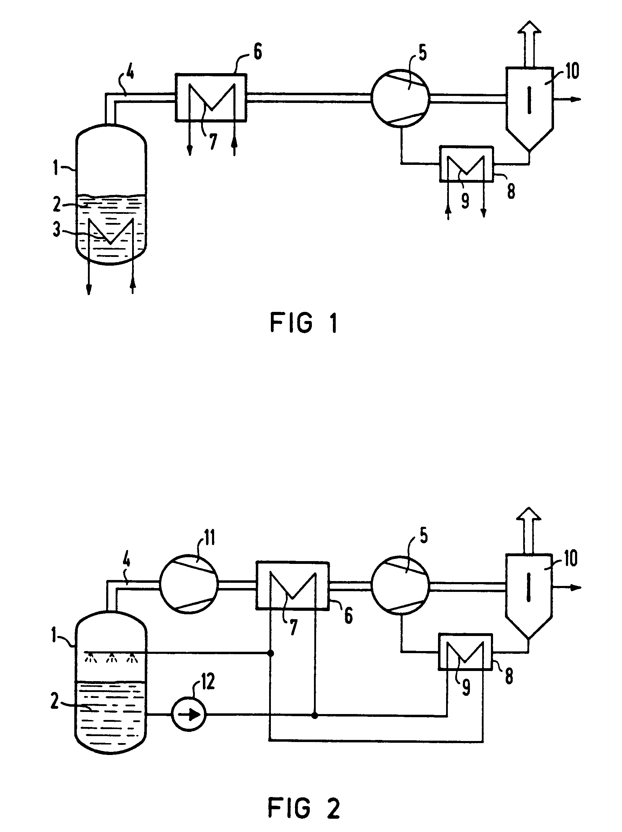

In FIG 1 ist mit 1 ein Verdampfer bezeichnet, in den eine zu verdampfende Prozeßflüssigkeit 2 eingefüllt ist. Handelt es sich bei dem durchzuführenden Prozeß um einen Chargenbetrieb, so wird zu Beginn des Prozesses nur einmal Prozeßflüssigkeit 2 in den Verdampfer 1 eingefüllt. Bei anderer Betriebsart wird gegebenenfalls während des Prozesses fortlaufend neue Prozeßflüssigkeit 2 in den Verdampfer 1 nachgespeist. Bei der in FIG 1 dargestellten Anlage ist Chargenbetrieb angenommen.

Mittels einer z.B. durch Heizdampf gespeisten Heizschlange 3 wird die Prozeßflüssigkeit 2 erwärmt und dadurch verdampft. Durch eine in der Absaugleitung 4 angeordnete Vakuumpumpe 5 wird im Verdampfer 1 ein Vakuum erzeugt, so daß die Verdampfung der Prozeßflüssigkeit 2 schon bei relativ niedrigen Temperaturen erfolgt. Die Absaugleitung 4 ist über einen mit einer Kühlschlange 7 versehenen Kondensator 6 zu der Vakuumpumpe 5 geführt. Damit wird der aus dem Verdampfer 1 abgezogene Brüden durch das den Kondensator 6 durchströmende Kühlwasser abgekühlt. Da mit der Abkühlung des Brüden eine Volumenverminderung verbunden ist, ergibt sich für die Vakuumpumpe 5 eine kleinere Baugröße, als wenn diese dem Verdampfer 1 direkt ohne einen Kondensator 6 nachgeschaltet ist.

Der Vakuumpumpe 5, die eine Flüssigkeitsringpumpe sein kann, ist ein Wärmetauscher 8 zugeordnet, der ebenfalls mit einer von Kühlwasser durchströmten Kühlschlage 9 versehen ist. Der durch die Vakuumpumpe 5 mindestens auf Atmosphärendruck verdichtete Brüden wird mittels einer nachgeschalteten Aufbereitungsanlage 10 zu wieder verwendbarer Prozeßflüssigkeit aufbereitet. Dabei gegebenenfalls anfallende Abgase werden ebenfalls entweder zu einer weiteren Verwendung oder zur Abgabe an die Umwelt aufbereitet.

Die FIG 2 zeigt nunmehr eine erfindungsgemäß umgestaltete Anlage, bei der die im Prozeß anfallende Wärme nicht mehr über Kühlwasser an die Umwelt abgeführt, sondern im Prozeß zur Erwärmung der Prozeßflüssigkeit 2 genutzt wird. In FIG 2 sind die mit der Anlage nach FIG 1 übereinstimmenden Teile mit den gleichen Bezugzeichen wie in FIG 1 versehen.

Bei der umgestalteten Anlage nach FIG 2 ist zwischen dem Verdampfer 1 und dem Kondensator 6 ein Gasringkompressor 11 in die Absaugleitung 4 geschaltet. Dieser Kompressor 11 verdichtet den aus dem Verdampfer 1 abgesaugten Brüden, wobei eine Erwärmung desselben erfolgt. Hierbei ist die Verwendung eines Gasringkompressors 11 besonders vorteilhaft, da wegen des mit solchen Kompressoren 11 wirtschaftlich erreichbaren höheren Druckverhältnisses eine stärkere Erwärmung des Brüden erfolgt. Anschließend wird der Brüden von dem Gasringkompressor 11 durch den Kondensator 6 gedrückt, durch dessen Kühlschlange 7 nunmehr mittels einer Umwälzpumpe 12 Prozeßflüssigkeit 2 gepumpt wird. Im Kondensator 6 entzieht die Prozeßflüssigkeit 2 dem Brüden Wärme, so daß die gewünschte Volumenreduzierung des Brüden durch Abkühlung wiederum erreicht wird. Die dem Brüden entzogene Wärme wird jedoch nicht mehr an die Umwelt abgegeben, sondern verbleibt durch die Rückführung der Prozeßflüssigkeit 2 von dem Kondensator 6 in den Verdampfer 1 im Prozeß.

Zu der Kühlschlange 7 des Kondensators 6 ist noch die Kühlschlange 9 des Wärmetauschers 8 parallelgeschaltet. Somit dient auch die bei der Kühlung der Vakuumpumpe 5 anfallende Abwärme zum Aufheizen der Prozeßflüssigkeit 2.

Bei einer derartig umgestalteten Anlage ist in der Regel auch zum Anfahren des Prozesses eine Erwärmung der Prozeßflüssigkeit von außen nicht erforderlich.

Wie die Darstellung nach FIG 2 zeigt, bedarf es für die Umgestaltung der Anlage lediglich der Installation eines Gasringkompressors 11. Die Umwälzpumpe 12 ist nur dann erforderlich, wenn der durch die natürliche Schwerkraft erfolgende Flüssigkeitsdurchsatz bei den Gegebenheiten der bestehenden Anlage keinen ausreichenden Wärmeaustausch ergibt. Mit einer Umwälzpumpe 12 läßt sich jedoch in jedem Fall die Wirtschaftlichkeit der Anlage verbessern, da infolge des höheren Flüssigkeitsdurchsatzes eine größere Wärmemenge ausgetauscht wird. Die Verrohrung einer bestehenden Anlage kann weitgehend beibehalten werden. Es ist lediglich eine Ergänzung für den Anschluß des Kompressors 11 und der Umwälzpumpe 12 sowie für die Verbindung des Verdampfers 1 mit den Kühlschlangen 7 und 9 des Kondensators 6 und des Wärmetauschers 8 nötig.

## Patentansprüche

1. Prozeßanlage, die mindestens einen Verdampfer für eine Prozeßflüssigkeit, einen diesem nachgeschalteten Kondensator und eine Vakuumpumpe aufweist, in welcher Anlage die Prozeßflüssigkeit in dem Verdampfer unter Vakuum verdampft und die Brüden über eine an den Verdampfer ange-schlossene Absaugleitung durch den Kondensa-tor hindurch zu der Vakuumpumpe geführt sind, **dadurch gekennzeichnet,** daß zwischen dem Verdampfer (1) und dem Kondensator (6) ein die Brüden durch den Kondensator (6) drückender Gasringkompressor (11) in die Absaugleitung (4) geschaltet ist, daß ferner als Kühlflüssigkeit Prozeßflüssigkeit (2) durch den Kondensator (6) geleitet, in diesem erwärmt und danach in den Verdampfer (1) gespeist ist.

2. Prozeßanlage nach Anspruch 1, **dadurch gekennzeichnet,** daß die Prozeßflüssigkeit (2) mittels einer Umwälzpumpe (12) durch den Kondensator (6) gepumpt ist.

3. Prozeßanlage nach Anspruch 2, **dadurch gekennzeichnet,** daß die Prozeßflüssigkeit (2) durch die Umwälzpumpe (12) ferner über einen der Vakuumpumpe (5) zugeordneten Wärmetauscher (8) geführt ist.

4. Prozeßanlage nach einem oder mehreren der vorhergehenden Anprüche, **dadurch gekennzeichnet,** daß die Vakuumpumpe (5) trockenlaufend und ölfrei ist.

5. Prozeßanlage nach einem oder mehreren der vorhergehenden Ansprüche, **dadurch gekennzeichnet,** daß der Gasringkompressor (11) und die Vakuumpumpe (5) auf einem gemeinsamen Kastenrahmen angeordnet sind, an dem ferner die für den Anschluß des Gasringkompressors (11) und des Kondensators (6) erforderlichen externen Rahranschlüsse vorgesehen sind.

6. Prozeßanlage nach einem oder mehreren der vorhergehenden Ansprüche, **dadurch gekennzeichnet,** daß der Gasringkompressor (11) von einer Dampfturbine angetrieben ist.

## Claims

1. Processing plant which has at least one vaporiser for a process liquid, a condenser positioned downstream of said vaporiser and a vacuum pump, in which plant the process liquid is vaporised in the vaporiser in a vacuum and the vapours are conveyed through the condenser to the vacuum pump via a suction line connected to the vaporiser, characterised in that a gas ring compressor (11) pressing the vapours through the condenser (6) is connected between the vaporiser (1) and the condenser (6), in that in addition process liquid (2) is conveyed as cooling fluid through the condenser (6), is heated in this and then fed into the vaporiser (1).

2. Processing plant according to claim 1, characterised in that the process liquid (2) is pumped through the condenser (6) by means of a circulating pump (12).

3. Processing plant according to claim 2, characterised in that the process liquid (2) is guided through the circulating pump (12), further through a heat exchanger (8) associated with the vacuum pump (5).

4. Processing plant according to one or more of the preceding claims, characterised in that the vacuum pump (5) is dry-running and oil-free.

5. Processing plant according to one or more of the preceding claims, characterised in that the gas ring compressor (11) and the vacuum pump (5) are arranged on a common box frame on which, in addition, the external pipe connections necessary for connecting the gas ring compressor (11) and the condenser (6) are provided.

6. Processing plant according to one or more of the preceding claims, characterised in that the gas ring compressor (11) is driven by a steam turbine.

## Revendications

1. Installation pour la mise en oeuvre de processus industriels, qui comporte au moins un évaporateur pour un liquide de processus, un condenseur monté en aval de celui-ci et une pompe à vide, installation dans laquelle le liquide de processus est évaporé sous vide dans l'évaporateur et les buées sont envoyées par un conduit d'aspiration raccordé à l'évaporateur à la pompe à vide en passant par le condenseur, caractérisée en ce qu'un compresseur à anneau de gaz (11) refoulant les buées dans le condenseur (6) est monté sur le conduit d'aspiration (4), entre l'évaporateur (1) et le condenseur (6), en ce qu'en outre du liquide de processus (2) est envoyé dans le condenseur (6) en tant que liquide de refroidissement, y est réchauffé et est envoyé ensuite à l'évaporateur (1).

2. Installation suivant la revendication 1, caractérisée en ce que le liquide de processus (2) est envoyé par pompage dans le condenseur (6), au moyen d'une pompe de recirculation (12).

3. Installation suivant la revendication 2, caractérisée en ce que le liquide de processus (2) est envoyé, en outre, par la pompe de recirculation (12) sur un échangeur de chaleur (8) associé à la pompe à vide (5).

4. Installation suivant l'une ou plusieurs des revendications précédentes, caractérisée en ce que la pompe à vide (5) fonctionne à sec et sans huile.

5. Installation suivant l'une ou plusieurs des revendications précédentes, caractérisée en ce que le compresseur à anneau de gaz (11) et la pompe à vide (5) sont disposés sur un bâti en forme de caisson qui est commun et sur lequel sont prévus, en outre, les raccords extérieurs de tuyau nécessaires pour le raccordement du compresseur à anneau de gaz (11) et du condenseur (6).

6. Installation suivant l'une ou plusieurs des revendications précédentes, caractérisée en ce que le compresseur à anneau de gaz (11) est entraîné par une turbine à vapeur.

FIG 1

FIG 2